# EUROPÄISCHE PATENTSCHRIFT

(11) **EP 2 625 152 B1**
(45) Veröffentlichungstag und Bekanntmachung des Hinweises auf die Patenterteilung: **27.02.2019**
(21) Anmeldenummer: 11770688.7
(22) Anmeldetag: 01.09.2011
(51) Int. Cl.: C04B 20/10, C04B 26/06, C04B 28/00, C04B 28/24

(54) **VERWENDUNG EINES WÄRMEDÄMMENDEN BRANDSCHUTZFORMTEILS UND VERFAHREN ZU SEINER HERSTELLUNG**
USE OF THERMALLY INSULATING FIRE-PROTECTION MOULDING AND PROCESS FOR PRODUCING SAME
UTILISATION D'UNE PIÈCE MOULÉE COUPE-FEU CALORIFUGE ET SON PROCÉDÉ DE FABRICATION

(30) Priorität: 06.09.2010 DE 102010044466
(43) Veröffentlichungstag der Anmeldung: 14.08.2013
(73) Patentinhaber: TDH - GmbH Technischer Dämmstoffhandel, 20539 Hamburg (DE)
(72) Erfinder: ANGENENDT, Rainer, 46509 Xanten (DE); GENTH,Peer, 15834 Rangsdorf (DE); MESCHKE, Heike, 47623 Kevelaer (DE)
(74) Vertreter: Schoenen, Norbert
(86) Internationale Anmeldenummer: PCT/EP2011/004407
(87) Internationale Veröffentlichungsnummer: WO 2012/031717

(56) Entgegenhaltungen:
- EP-A1- 0 829 459
- EP-A1- 1 201 703
- EP-A1- 1 591 598
- EP-A1- 1 992 597
- EP-A2- 1 484 294
- WO-A2-2011/104005
- WO-A2-2011/104006
- GB-A- 2 341 607

## Beschreibung

Die Erfindung betrifft ein Verfahren zur Herstellung eines rauchdichten, wärmedämmenden Brandschutzformteils nach dem Oberbegriff von Anspruch 1 und seine Verwendung.

Unter dem Begriff Leichtfüllstoffe sind hier hochschmelzende mineralische, insbesondere geschlossenzellige, Hohlkugeln und Granulate niedriger Dichte zu verstehen, zum Beispiel Glashohlkugeln, geblähte Vulkanasche, Bläh-perlit usw.

### Stand der Technik

Bekannt sind Brandschutzplatten, die unter dem Handelsnamen "Knauf THERMAX" vertrieben werden und expandiertes Vermiculit, ein Dreischichtsilikat, sowie rein anorganische Bindemittel, aber keine Fasern enthalten. Sie weisen eine Dichte (Raumgewicht) von ca. 475 bis 850 kg/m³ auf.

Bekannt sind außerdem rein anorganische Brandschutzplatten aus Glasfaserleichtbeton, die unter dem Handelsnamen "AESTUVER T" vertrieben werden und eine Dichte (Raumgewicht) von ca. 690 bis 980 kg/m³ aufweisen.

### Hintergrund zum baulichen Brandschutz

Die baulichen Maßnahmen, beispielsweise in Gebäuden, sind sehr vielfältig und erstrecken sich von den verwendeten Baustoffen und Bauteilen, in Deutschland geregelt in DIN 4102 und ENV 1992-1-2, über den bautechnischen Brandschutz in Industriebauten, geregelt in der DIN 18230, über die Fluchtwegplanung hin zu Löschanlagen in Gebäuden. In Österreich ist dies in den verschiedenen TRVB-B festgelegt.

In Deutschland ist es notwendig, für jeden größeren Bau ein Brandschutzgutachten durch einen zugelassenen Brandschutzgutachter erstellen zu lassen. Zudem muss das erstellte Brandschutzkonzept mit den lokalen Behörden abgestimmt werden. Ein Bundesgesetz delegiert die Zuständigkeit in die Landesverantwortung. Die Regelungen sind deshalb von Bundesland zu Bundesland verschieden.

In Österreich unterliegt die feuerpolizeiliche Abnahme den Brandverhütungsstellen (ebenfalls in Hoheit einzelner Bundesländer). In der Schweiz ist sie kantonsweise geregelt.

Bauliche Maßnahmen müssen vor allem folgende Aspekte berücksichtigen:
- Brandverhalten von Baustoffen
- Feuerwiderstand der Bauteile
- Aufteilung der Gebäude in Brandabschnitte durch Brandwände und -schutztüren
- Fluchtwegplanung
- aktive Brandbekämpfung durch Sprinkleranlagen

Gerade die immer stärker werdende Durchdringung großer Gebäude mit Energieversorgungs-, Steuer- und Datenleitungen läuft der von der Bauaufsicht geforderten Abschnittstrennung mit Brandwänden und feuerbeständigen Geschossdecken zuwider. Deshalb werden in modernen Gebäuden mit größeren Menschenansammlungen (beispielsweise Bahnhöfen, Flughäfen, Museen, Kongresshallen) spezielle Feuerschutzeinrichtungen wie Brandmeldeanlagen, Notbeleuchtung, Brandschutztore und Brandschutztüren möglichst lange aufrechterhalten.

In öffentlichen Gebäuden in Deutschland ist der Einsatz von halogenfreien Leitungen (kein PVC) Standard. Stromleitungen, die durch mehrere Brandabschnitte verlaufen, müssen mit einem Brandschott gesichert werden. Elektrische Leitungen, die für die maschinelle Entrauchung oder eine Brandmeldeanlage genutzt werden, müssen abhängig vom Einsatz eine Feuerwiderstandsdauer (mit Funktionserhalt) von E90 oder E30.

Nicht zu vergessen sind Gebäude, die von in ihrer Bewegung eingeschränkten Menschen genutzt oder bewohnt werden (Krankenhäuser, Kliniken, Altenwohnheime, Seniorenwohnanlagen usw.).

Bei Tunnelbauwerken hat der bauliche Brandschutz aufgrund der dramatischen Tunnelbrände in den letzten Jahren stark an Bedeutung gewonnen. Neben der Einhaltung von konstruktiven Regeln wird hier der rechnerische Nachweis (die so genannte "heiße Bemessung") zunehmend wichtiger. Regelungen zum rechnerischen Nachweis finden sich z. B. in der ENV 1992-1-2, der ZTV-Ing und der "Richtlinie für den Brand- und Katastrophenschutz" der Deutschen Bahn.

Bekannt ist aus dem Dokument EP 1 484 294 A2 ein feuerbeständiges, beschichtetes Bauelement, welches zwar einen Leichtfüllstoff, nämlich poröse Glaspartikel enthält, aber keinesfalls einen geschlossenzelligen Leichtfüllstoff.

### Aufgabe und Lösung der Erfindung

Der Erfindung liegt die Aufgabe zugrunde, äußerst leichte, stabile und ausreichend flexible Brandschutzformteile mit hoher Festigkeit bei Feuereinwirkung der eingangs genannten Art bereitzustellen, die eine Dichte von weniger als 0,3 g/cm³ (entsprechend 300 kg/m³) und einen Schmelzpunkt nach DIN 4102 größer als 1000 °C haben und bis zu dieser Temperatur keine äußeren oder inneren Risse und kein Zerbröseln zeigen und die außerdem eine sehr geringe Wärmeleitfähigkeit zeigen.

Diese Aufgabe wird erfindungsgemäß durch die Merkmale des Anspruchs 1 gelöst.

Unter dem Begriff Hybridbindemittel wird hier ein Bindemittel mit sowohl anorganischen als auch organischen Anteilen verstanden. Ausführliche Erläuterungen finden sich weiter unten nach der Zwischenüberschrift "Erfindungsgemäß eingesetztes Hybridbindemittel".

In der vorliegenden Patentanmeldung sind die Bindemittel "Hybridbindemittel", die einerseits über den organischen Anteil die für die erfindungsgemäßen Anwendungen notwendige Elastizität bewirken, wobei der anorganische Anteil andererseits den Verbund im Brandfall erhält.

Im Brandfall werden oberhalb von 160 - 400 °C die organischen Bestandteile der Hybridbindemittel thermisch zersetzt. Die Bindemittel verspröden, halten aber ihre bindende Wirkung durch den anorganischen Anteil aufrecht.

Vorzugsweise enthält das eingesetzte Hybridbindemittel feine Partikel, die wiederum aus amorphen Kieselsäurepartikeln (5) zusammengesetzt sind, die als Bindemittel ein Polymer (6) auf Acrylatbasis enthalten, insbesondere n-Butylacrylat und Methylmethacrylat und/oder Latex.

Weitere vorteilhafte Ausgestaltungen der Erfindung sind in den Unteransprüchen angeführt.

Erfindungsgemäß wichtig ist die Kombination von Hybridbindemittel und wasserabspaltendem Mineral. Das Hybridbindemittel ermöglicht bei einem entsprechend hohen Anteil die hohe Festigkeit und Flexibilität des Brandschutzformteils bei einem dennoch niedrigen Gewicht. Die Brennbarkeit des organischen Anteils des Hybridbindemittels wird durch das wasserabspaltende Mineral unterdrückt, welches bei erhöhter Temperatur Wasser abgibt und damit quasi als Löschmittel wirkt. Hierzu ist erfindungsgemäß gewährleistet, dass die Freisetzung des Kristallwassers im selben Temperaturbereich wie die thermische Zersetzung des Bindemittels stattfindet. Durch die Kombination von Hybridbindemittel und wasserabspaltendem Mineral kann damit in überraschender Weise eine äußerst niedrige Dichte bei dennoch guter Feuerbeständigkeit erreicht werden. Insbesondere verhindert das wasserabspaltende Mineral die Entzündung der Rauchgase im Brandfall.

Versuche beim TÜV Nord im Kleinbrandofen haben gezeigt, dass erfindungsgemäße Brandschutzplatten mit der Dicke von nur 18 mm und einer Dichte von 0,125 g/l dem Brand über 30 min widerstehen.

Weiterhin ist sichergestellt, dass weder durch den Abbrand der organischen Bestandteile noch durch das Freisetzen des Kristallwassers das Material schrumpft, sich Risse bilden oder das Material instabil wird.

Besonders innovativ ist dabei, dass sich die anorganischen Reste der Hybridbindemittel und die wasserabspaltenden mineralische Granulate und Füllstoffe bei der im Brandfall sich einstellenden Temperaturerhöhung so ergänzen, dass sie verfestigend wirken und eine formstabile Brandschutzplatte erhalten bleibt.

Es gibt keinen vergleichbaren Dämmstoff, der die Eigenschaften einer Brandschutzplatte gleichsam erfüllt wie die erfindungsgemäßen wärmedämmenden Brandschutzplatten.

Die erfindungsgemäßen Formteile sind bis zu Temperaturen von 1000 °C so fest, dass Brandschutzplatten mit einer Stärke von etwa 18 mm den geforderten Feuerwiderstand entsprechend den Normbedingungen aufweisen.

Vorzugsweise werden die Mengen bzw. Anteile von Hybridbindemittel und wasserabspaltendem Mineral derart aufeinander abgestimmt, so dass die Anforderungen der geforderten Brandschutzklasse eingehalten werden.

Der Geometrie der Formteile ist grundsätzlich keine Grenze gesetzt. Auch Formteile mit komplexen Geometrien sind herstellbar.

In der vorliegenden Patentanmeldung wird ausdrücklich darauf verwiesen, dass es sich um Brandschutzformteile, z. B. Brandschutzplatten handelt. Diese müssen rauchdicht sein und dementsprechend natürlich auch der Wärmekonvektion einen entsprechenden Widerstand leisten.

Steine, Rohre, Hohlkörper und andere Formteile sind ebenso herstellbar wie vornehmlich Platten. Die Dichte von 0,1 bis 0,3 g/cm³ liegt deutlich unterhalb der Rohdichten bekannter rauchdichter Brandschutzplatten (Mineralfaserplatten benötigen für die Rauchdichtigkeit und die Gewährleistung des Brandschutzes immer eine stabile rauchdichte und feuerfeste Deckschicht). Auch die Wärmeleitfähigkeit von etwa 0,04 W/mk bei 10 °C ist wesentlich besser, nämlich erheblich niedriger als bei bekannten Brandschutzplatten.

Zur Herstellung wird von einer wässrigen Masse ausgegangen, die durch bekannte Formgebungsverfahren, nachfolgendes Trocknen und thermische Nachbehandlung Behandlung bis etwa 110°C hergestellt werden. So sind zum Beispiel die folgenden Formgebungsverfahren geeignet:
- Vibrationspressen mit niedriger Auflast,
- Isostatisches Pressen,
- Manuelles oder mechanisches Stampfen bzw. Rammen für komplexe Formen oder kleinere Anzahl zu fertigender Teile,
- Strang- bzw. Extrusionsverfahren,
- Schlickergießen, insbesondere für spezielle Teile, aber auch für größere Blöcke, wobei der Wassergehalt der für Schlickergießen hergestellten Massen um ca. 5 bis 15 % höher liegt und Verdickungsmittel enthält
- Walzen.

Vor dem Trocknen ist ein vorsichtiges und möglichst vollständiges Temperieren auf die Trocknungstemperatur zu empfehlen, um Trockenrisse oder Fehler beim Trocknen zu vermeiden. Die Trocknung kann bei Raumtemperatur oder bei Temperaturen von bis zu 70 °C vorgenommen werden. Eine kurzfristige Nachtrocknung bei ca. 110 °C zersetzt die für diesen Fall speziell eingesetzten Netzmittel und erhöht die Hydrophobie.

Im Brandfall werden oberhalb von 160 - 400 °C die organischen Bestandteile der Hybridbindemittel thermisch zersetzt. Die Bindemittel verspröden, halten aber ihre bindende Wirkung durch den anorganischen Anteil aufrecht. Gleichzeitig wird durch die Wasserabspaltung aus den mineralischen Füllstoffen ein Entzünden (Abbrennen) der kurzfristig auftretenden Rauchgase verhindert. Versuche beim TÜV Nord im Kleinbrandofen haben gezeigt, dass bereits Brandschutzplatten mit der Dicke von 18 mm und einer Dichte von 0,125 g/l dem Brand über 30 min widerstehen.

### Eigenschaften und Herstellung der plastischen Masse, die als Ausgangsmaterial zur Herstellung des erfindungsgemäßen wärmedämmenden Brandschutzplatte dient

Als Leichtfüllstoff wird geblähtes zelluläres Vulkangestein in Form nichtporöser Hohlgranulate und/oder Glashohlkugeln eingesetzt. Bei porösen Hohlgranulaten würde sich dagegen die Rohdichte erhöhen, mehr Kleber und mehr Mineralien wären erforderlich, die Massen würden stumpfer und wären damit schlechter zu verarbeiten und die Porosität des Endproduktes würde sich deutlich erhöhen.

Als Bindemittel werden Hybridbindemittel eingesetzt, deren Grundstruktur anorganisch ist. Dies bewirkt eine Reduzierung der Brandlast, und die Bindung bleibt, wenn auch mit anderen Eigenschaften, bei hohen Temperaturen erhalten. Da diese Bindemittel beim Abbrand kaum Schrumpf aufweisen, verändern die Brandschutzformteile ihre Dimensionen unter Brandlast nur unwesentlich.

Erfindungsgemäß ist die Masse nach dem Erhärten äußerst stabil, zeigt selbst bei einer einseitiger Temperaturbeanspruchung von 1000 °C praktisch keinen Schrumpf, keine äußeren oder innere Risse und kein Zerbröseln. Die Anwendungstemperatur liegt allerdings aufgrund der enthaltenen organischen Bestanteile der Hybridbindemittel und der wasserabspaltenden Mineralien nur bei 150 °C, oberhalb dieser Temperatur gehen bestimmte Eigenschaften wie Hydrophobie, Vibrationsfestigkeit und Flexibilität verloren. Die Innovation des erfindungsgemäßen Produktes besteht insbesondere darin, dass geeignete Hybridbindemittel-Systeme und darauf abgestimmte wasserabspaltende Mineralien eingesetzt werden, welches die Stützkonstruktionen aus Fasern und mineralischen Füllstoffen bereits bei der Trocknung unter Raumtemperatur mit den Leichtfüllstoffen (geblähtes Vulkangestein und/oder Glashohlkugeln) ausreichend vernetzen und aufgrund ihres organischen Anteils den Formteilen die notwendige Festigkeit, Vibrationsstabilität und Flexibilität für die Weiterverarbeitung und Anwendung verleihen. Der anorganische Anteil der Hybridbindemittel hält die Bindung auch oberhalb der Verbrennung des organischen Anteils aufrecht und verhindert somit ein Schrumpfen bzw. Rissbildungen in der Brandschutzplatte.

Besonders innovativ ist dabei, dass sich die anorganischen Reste der Hybridbindemittel und die wasserabspaltenden mineralische Granulate und Füllstoffe bei der im Brandfall sich einstellenden Temperaturerhöhung so ergänzen, dass sie verfestigend wirken und eine formstabile Brandschutzplatte erhalten bleibt.

Ein zentraler Kundennutzen beim Einsatz der erfindungsgemäßen Produkte liegt darin, dass neben dem gewünschten Ziel einer effizienten leichten Brandschutzkonstruktion eine signifikante Kostenersparnis im Bereich der Opportunitätskosten für die Kunden realisiert werden kann. Spezielle im Bereich des Kabinenbaus für Schiffe, aber auch beim brandsicheren Möbelbau für Züge etc. werden die Betriebskosten gesenkt.

Die Senkung dieser Kosten wird vornehmlich durch die Verringerung der Brandlast, der Reduzierung des Gewichtes und der Erhöhung des Brandschutzes für den Kunden erreicht.

Weitere wichtige Vorteile der erfindungsgemäßen Produkte:
- Nicht brennbar
- Geringes Gewicht
- Hohe Temperaturbeständigkeit
- Niedrige Wärmeleitfähigkeit
- Gute Festigkeitseigenschaften
- Einfache Montage und Verarbeitung
- Viele Kombinationsmöglichkeiten
- geringe Rauchgasentwicklung
- Keine Geruchsentwicklung
- Nicht hygroskopisch
- Hydrophob
- Wasserleitend (Lotuseffekt)
- Chemikalienbeständig
- Gutes elektrisches Isoliervermögen
- Recyclebar
- Deponiefähig

### Erfindungsgemäß eingesetzte Leichtfüllstoffe

Perlit (englisch: perlite) bezeichnet in den Geowissenschaften ein alteriertes (chemisch und physikalisch umgewandeltes) vulkanisches Glas (Obsidian) und zählt damit zu den Gesteinen. Die so genannte perlitische Struktur wird hier durch etwa erbsengroße Glaskügelchen gebildet. Perlit enthält bis zu 2 % Wasser und hat eine Dichte von etwa 900 bis 1000 kg/m³ (Schüttdichte des Rohperlits). Durch Glühen auf ca. 800°C bis 1000 °C bläht sich Perlit auf das fünfzehn- bis zwanzigfache seines Ursprungsvolumens auf und hat dann eine Schüttdichte von 50 bis 100 kg/m³ und eine Wärmeleitfähigkeit von λ = 0,040 bis 0,070 W/mK.

Erfindungsgemäß sind diese Perlite wegen der Porosität nicht einsetzbar.

Erfindungsgemäß dagegen geeignet sind mikrozellular expandierte Vulkangesteine und Glashohlkugeln. Mikrozellular expandierte Vulkangesteine nach neuen umweltschonenden und energiesparenden Verfahren hergestellt, erzielen Eigenschaften und technische Werte, die es von älteren, porig expandierten Vulkangesteinen ("expandierten Perliten") unterscheidet. Mikrozellulares, expandiertes Vulkangestein ist ein Füllstoff aus der Gruppe der Aluminiumsilikate und setzt sich aus kugeligen ("Bienenwabenstruktur"), stäbchenförmigen und flockigen Teilchen zusammen, woraus hohe Packungsdichten und höhere Verbundfestigkeiten als bei herkömmlichen Mikrohohlkugeln durch mechanische und kohäsive Bindungskräfte resultieren. Gezielte Oberflächenbeschichtungen ermöglichen einen vorteilhaften Verbund mit der anorganischen bzw. organischen Matrix. Hieraus resultiert weniger Schwund und bessere technische Eigenschaften. Kommerziell erhältlich ist geblähtes imprägniertes Perlit z. B. unter dem Handelsnamen NOBLITE® (Produkt der Fa. NOBLITE, Route de Claye, F-77181 LE PIN, Frankreich)und Technoperl® (Produkt der Europerl Deutschland, D-94032 Passau, Nibelungenplatz 4).

Um besonders niedrige Rohdichten zu erzielen, hat sich die Kombination oder der alleinige Einsatz von Mikroglashohlkugeln, wie sie z.B. der Hersteller 3M anbietet, bewährt.

### Erfindungsgemäß eingesetzte Fasern

Insbesondere werden organische Fasern, zum Beispiel Kohlefasern und/oder mineralische Fasern und/oder mineralische Nadeln, eingesetzt.

### Erfindungsgemäß eingesetztes Hybridbindemittel

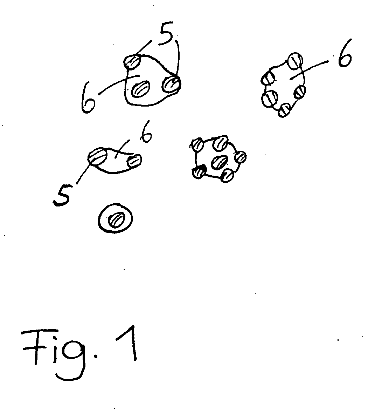

Vorzugsweise wird ein organisch-anorganisches Hybridbindemittel eingesetzt, welches unter dem Handelsnamen COL.9 der Firma BASF erhältlich ist, und/oder Levasil 4063 der Firma Obermeier. Beide Produkte enthalten amorphe Kieselsäurepartikel und Polymere auf der Basis von n-Butylacrylat und Methylmethacrylat oder Latex (siehe Figur 1). Die Partikel sind in Wasser dispergiert. Durch die Klebrigkeit der Partikel aufgrund des Polymergehaltes erhält man ein ausgezeichnetes Bindemittel für niedrige Temperaturen, etwa bis 200 °C. Bei erhöhten Temperaturen zersetzt sich der Polymeranteil und die Kieselsäurepartikel bleiben übrig und damit die Struktur erhalten, wobei die Kieselsäurepartikel bei einer entsprechend hohen Temperatur ebenfalls ein festes Gerüst bildet. Ein Schrumpf tritt daher weder bei niedriger noch bei erhöhter Temperatur auf. Die Bindemittel haben einen Festkörpergehalt von etwa 35 bis 60 Gew.-%. Der Silicatanteil, bezogen auf den Feststoffgehalt, beträgt 30 bis 50 Gew.-% bzw. 75 bis 95 Gew.-%.

### Erfindungsgemäß eingesetzte wasserabspaltende mineralische Füllstoffe

Vorzugsweise wird oberflächenbehandeltes Aluminiumtrihydrat eingesetzt, z.B. Trefil 744-300 EST und/oder Trefil 744-300 MST der Firma Quarzwerke GmbH. Zusätzlich wird eine oberflächenbehandelte Kieselerde eingesetzt. Unter Kieselerde versteht man ein inniges Gemisch von feinteiliger Kieselsäure und Kaolinit. Bekannt ist zum Beispiel die Neuburger Kieselerde, die erfindungsgemäß bevorzugt eingesetzt wird. Für die bessere Benetzbarkeit mit Wasser ist die Kieselerde mit einem Silan behandelt, so dass die einzelnen Partikel eine funktionelle hydrophile Oberfläche erhalten.

Erhältlich ist eine derartige aktivierte Kieselerde unter dem Handelsnamen "AKTISIL EM" der Firma Hoffmann Mineral GmbH, Neuburg (Donau). Hier ist die Kieselerde mit 3-Epoxipropyloxipropyltrimethoxisilan behandelt. Diese so genannte aktivierte Kieselerde kann in Pulverform eingesetzt werden. Möglich ist erfindungsgemäß aber auch der Einsatz eines Gemisches von Kieselsäuresol und Kaolin/Kaolinit.

### Herstellungsbeispiele und Beispielrezepturen

Sämtliche flüssige Komponenten der Rezeptur werden genau eingewogen und vorsichtig unter Vermeidung von Schaumbildung miteinander vermischt. Hier haben sich in der Praxis einfache Zahnscheibenrührer bewährt.

Die genau abgewogenen Fasern werden in kleinen Einheiten gleichmäßig dieser Mischung zugefügt, durch Verrühren (bei niedriger Drehzahl) zerrupft und vollständig mit der wässrigen Lösung benetzt (Knotenbildung vermeiden).

Danach werden die genau abgewogenen Leichtfüllstoffe und Mineralien untereinander in einem Freifallmischer gemischt und unter gleichmäßigem Rühren der Mischung einem Zwangsmischer (z.B. Firma BEBA) zugeführt. Beide Vormischungen werden unter gleichmäßigem langsamem Rühren ca. 25 min miteinander vermengt. Hohe Scherkräfte, Druck und Reibung sind weitestgehend zu vermeiden, um die mikrozellular geblähten Vulkangesteine nicht zu beschädigen.

Die Leichtfüllstoffe sollten vollständig benetzt sein und einen gleichmäßigen lockeren Mörtel beziehungsweise eine plastische Masse ergeben.

**Rezeptur 1 für 100 kg plastische Masse für Formteile mit einer Rohdichte von ca. 0,125 g/l**

| | |
|---|---|
| Wasser | 55,7 kg |
| Mineralwolle (z. B. Rockwool lose Wolle) | 3,0 kg |
| Carbonfasern | 0,3 kg |
| Hybrid-Bindemittel (COL 9 von BASF / Levasil 4063 von Obermeier) | 11,0 kg |
| Leichte Glashohlkugeln (K1/K15 von 3M) | 22,0 kg |
| Kieselerde (z. B. Aktisil EM von Hoffmann-Minerals) | 2,0 kg |
| Aluminiumtrihydrat | 4,0 kg |
| Tensidlösung 2 % (z. B. Tegopren 5840 von Evonik) | 2,0 kg |

**Rezeptur 2 für 100 kg plastische Masse für Formteile mit einer Dichte von ca. 0,3 g/l**

| | |
|---|---|
| Wasser | 47,00 kg |
| Wollastonit (z. B. Tremin939-300 EST der Quarzwerke) | 6,50 kg |
| Hybrid-Bindemittel (COL 9 von BASF / Levasil 4063 von Obermeier) | 6,50 kg |
| Wasserbeständig ausgerüstete geblähte mikrozelluläre Vulkangesteine (z. B. Noblite 100 EC und Noblite 200 EC von Noblite) | 32,00 kg |
| Kieselerde (z. B. Aktisil EM von Hoffmann-Minerals) | 3,00 kg |
| Aluminiumtrihydrat | 4,00 kg |
| Tensidlösung 2 % (z. B. Tegopren 5840 von Evonik) | 1,00 kg |

## Patentansprüche

1. **Verfahren zur Herstellung** eines rauchdichten, wärmedämmenden Brandschutzformteils hergestellt durch Formgebung einer plastischen Masse und Trocknung bei Temperaturen zwischen Raumtemperatur und 110 °C, wobei die Masse enthält:
mindestens einen Leichtfüllstoff, ein Bindemittel, ein wasserabspaltendes Mineral, Fasern und/oder mineralische Nadeln, und Wasser,
wobei man als Leichtfüllstoff geblähtes geschlossenzelliges Vulkangestein, das mit einer oberflächlichen Wasserschutzschicht ausgerüstet ist, und/oder Glashohlkugeln einsetzt, wobei der Leichtfüllstoff eine Schüttdichte von weniger als 200 kg/m³ aufweist,
wobei als Bindemittel mindestens ein organisch-anorganisches Bindemittel eingesetzt wird, welches feinteilige Kieselsäure und ein organisches Polymer enthält, und
wobei die Masse eine oberflächenbehandelte Kieselerde, wasserabspaltende mineralische Füllstoffe und gegebenenfalls ein Gemisch aus Kieselsäuresol und Kaolin oder Kaolinit, enthält,
**gekennzeichnet durch** die folgende Zusammensetzung:
Leichtfüllstoff 45 bis 75 Gew.-%
Fasern bis 15 Gew.-%
Reaktionsprodukt der thermischen Härtung des organischanorganischen Hybrid-Bindemittels 8 bis 25 Gew.-%
Wollastonit bis 30 Gew.-%
Wasserabspaltende Mineralien 6 bis 18 Gew.-%.

2. Verfahren nach Anspruch 1, **dadurch gekennzeichnet, dass** die plastische Masse eine einheitliche Art von Fasern oder ein Gemisch unterschiedlicher Fasern, insbesondere Kohlenstofffasern und mineralische Fasern, mit einem Erweichungspunkt von 500 °C oder höher und/oder mineralische Nadeln enthält.

3. Verfahren nach Anspruch 1, **dadurch gekennzeichnet, dass** das Brandschutzformteil ausgebildet ist als Wärmedämmplatte, Brandschutzplatte, Normstein oder Mauerstein.

4. Verfahren nach Anspruch 1, **dadurch gekennzeichnet, dass** das in der plastischen Masse eingesetzte Hybridbindemittel feine Partikel enthält, die wiederum aus amorphen Kieselsäurepartikeln (5) zusammengesetzt sind, die als Bindemittel ein Polymer (6) auf Acrylatbasis enthalten, insbesondere n-Butylacrylat und Methylmethacrylat und/oder Latex.

5. Verfahren nach Anspruch 1, **dadurch gekennzeichnet, dass** in der plastischen Masse eine einheitliche Art von Fasern oder ein Gemisch unterschiedlicher Fasern, insbesondere mineralische Fasern und Kohlenstofffasern, mit einem Erweichungspunkt von mindestens 500 °C, und/oder mineralische Nadeln eingesetzt werden.

6. **Verwendung** des nach Anspruch 1 hergestellten Formteils als wärmedämmendes Brandschutzformteil.

## Claims

1. **Method for producing** a smoke-proof, heat-insulating fire protection molded part, produced by shaping a plastic mass and drying at temperatures between room temperature and 110°C, the mass containing:
at least one lightweight filler, a binder, a water-eliminating mineral, fibers and/or mineral needles, and water,
expanded closed-cell volcanic rock provided with a superficial water protection layer, and/or hollow glass spheres, being used as the lightweight filler, the lightweight filler having a bulk density of less than 200 kg/m³,
at least one organic-inorganic binder that contains finely divided silicic acid and an organic polymer being used as the binder, and
the mass containing a surface-treated siliceous earth, water-eliminating mineral fillers and
optionally a mixture of silicic acid sol and kaolin or kaolinite,
**characterized by** the following composition:
lightweight filler 45 to 75 wt.%
fibers up to 15 wt.%
reaction product of the thermal hardening of the organic-inorganic hybrid binder 8 to 25 wt.%
wollastonite up to 30 wt.%
water-eliminating minerals 6 to 18 wt.%.

2. Method according to claim 1, **characterized in that** the plastic mass contains a uniform type of fiber or a mixture of different fibers, in particular carbon fibers and mineral fibers, having a softening point of 500°C or higher and/or mineral needles.

3. Method according to claim 1, **characterized in that** the fire protection molded part is designed as a heat-insulating panel, a fire protection panel, a standard brick or a building brick.

4. Method according to claim 1, **characterized in that** the hybrid binder used in the plastic mass contains fine particles which are in turn composed of amorphous silicic acid particles (5) that contain an acrylate-based polymer (6) as the binder, in particular n-butyl acrylate and methyl methacrylate and/or latex.

5. Method according to claim 1, **characterized in that** in the plastic mass a uniform type of fiber or a mixture of different fibers, in particular mineral fibers and carbon fibers, having a softening point of at least 500°C, and/or mineral needles are used.

6. **Use** of the molded part produced according to claim 1 as a heat-insulating fire protection molded part.

## Revendications

1. **Procédé de fabrication** d'une pièce moulée coupe-feu calorifuge fabriquée par moulage d'une masse plastique et séchage à des températures comprises entre la température ambiante et 110 °C, la masse contenant :
au moins une charge légère, un liant, un minéral déshydratant, des fibres et/ou des aiguilles minérales, et de l'eau,
dans lequel l'on utilise comme charge légère une roche volcanique expansée à cellules fermées qui est dotée d'une couche étanche superficielle, et/ou des billes de verre creuses, la charge légère présentant une masse volumique apparente inférieure à 200 kg/m³,
dans lequel au moins un liant organique-inorganique contenant de l'acide silicique en fines particules et un polymère organique, est utilisé comme liant, et
dans lequel la masse contient de la silice traitée en surface, des charges minérales déshydratantes et, le cas échéant, un mélange de sol d'acide silicique et de kaolin ou kaolinite,
**caractérisé par** la composition suivante :
45 % à 75 % en poids de charge légère
jusqu'à 15 % en poids de fibres
8 à 25 % en poids d'un produit de réaction du durcissement thermique du liant hybride organique-inorganique
jusqu'à 30 % de wollastonite
6 à 18 % en poids de minéraux déshydratants.

2. Procédé selon la revendication 1, **caractérisé en ce que** la masse plastique contient un type de fibres homogène ou un mélange de différentes fibres, en particulier des fibres de carbone et des fibres minérales ayant un point de ramollissement supérieur ou égal à 500 °C.

3. Procédé selon la revendication 1, **caractérisé en ce que** la pièce moulée coupe-feu est conçue comme une plaque calorifuge, une plaque coupe-feu, une pierre normalisée ou une brique.

4. Procédé selon la revendication 1, **caractérisé en ce que** le liant hybride utilisé dans la masse plastique contient des particules fines qui sont elles-mêmes composées de particules d'acide silicique (5) amorphes, qui contiennent, en tant que liant, un polymère (6) à base d'acrylate, en particulier de n-butylacrylate et de méthylméthacrylate et/ou de latex.

5. Procédé selon la revendication 1, **caractérisé en ce qu'**un type homogène de fibres ou un mélange de différentes fibres, en particulier de fibres minérales et de fibres de carbone, ayant un point de ramollissement d'au moins 500 °C et/ou des aiguilles minérales sont utilisés dans la masse plastique.

6. **Utilisation** de la pièce moulée fabriquée selon la revendication 1 en tant que pièce moulée coupe-feu calorifuge.
